# EUROPEAN PATENT SPECIFICATION

(11) **EP 4 283 760 B1**
(45) Date of publication and mention of the grant of the patent: **30.07.2025**
(21) Application number: 22175277.7
(22) Date of filing: 25.05.2022
(51) Int. Cl.: H01M 10/613, B60K 11/02, B60K 1/00, B60K 1/04, H01M 10/6556, H01M 10/6567, H01M 10/663, H01M 50/249

(54) **COOLANT DISTRIBUTION ARRANGEMENT AND SYSTEM FOR COOLING VEHICLE PROPULSION BATTERIES**
KÜHLMITTELVERTEILUNGSANORDNUNG UND -SYSTEM ZUM KÜHLEN VON FAHRZEUGANTRIEBSBATTERIEN
AGENCEMENT DE DISTRIBUTION DE RÉFRIGÉRANT ET SYSTÈME DE REFROIDISSEMENT DES BATTERIES DE PROPULSION D'UN VÉHICULE

(43) Date of publication of application: 29.11.2023
(73) Proprietor: Scania CV AB, 151 87 Södertälje (SE)
(72) Inventor: KYLEFORS, Björn, 155 32 Nykvarn (SE)
(74) Representative: Scania CV AB

(56) References cited:
- EP-A1- 3 916 209
- WO-A1-2020/192807
- WO-A1-2021/188030
- WO-A1-2021/221550
- WO-A1-2022/005373

## Description

### TECHNICAL AREA

The present application relates cooling of propulsion batteries and in particular propulsion batteries that may be positioned in several positions or clusters in or on a vehicle.

### BACKGROUND OF INVENTION

Battery-operated vehicles are provided with propulsion battery packs for providing enough energy for the operation of the vehicle. Propulsion battery packs are known to be sensitive to temperature differences in particular when they are combined in parallel electrical circuits. By keeping all the batteries at even temperatures, the aging of the batteries can be kept under control. A cooling circuit is then designed to provide even temperatures. That is, the coolant flow is guided as a parallel flow to the batteries.

Usually for battery-operated vehicles, the propulsion battery pack is placed quite close to the cooling system, including power train and electric machine cooling, radiators, pumps and valves. For busses the cooling system can be placed in the rear of the vehicle. Regarding busses for public transport, all propulsion battery packs cannot be placed in the rear of the vehicle and there is limited space available inside the bus in the passenger area. Therefore, some of the propulsion battery packs are placed on the roof of the bus. This poses problems with the coolant distribution from the cooling system in the rear up to the roof of the vehicle. One problem is that there also is limited space for conduits for coolant to and from the battery packs on the roof.

A general concern regarding cooling systems for battery packs is air in the system that needs to be removed in order for the cooling of the batteries to be efficient. This is because air bubbles may be trapped in different locations in the battery packs and the cooling in those locations will thus be inferior, and might risk damaging cells in the battery due to excessive heat. Air enters the cooling system when the system is assembled or if repairs are needed whereby the system is opened. Generally, there are deairing functions built in the cooling system such as expansion tanks connected at positions in the cooling system where air will gather, such as high points in the cooling system.

Regarding the above mentioned locations of battery packs such as on the roof, the de-airing poses a further problem because of the distance between the main cooling system and the battery packs. Due to the limited space for conduits, but also due to added costs, it may not be possible and/or desired to provide extra conduits and pumps for transporting air in the battery packs to the main cooling system. It would of course be possible to provide an extra de-airing unit in the vicinity of the battery packs, but again, this adds costs both regarding the unit as such but also added assembly time. Further, it would add to the complexity of the system and would also require additional space adjacent the battery packs, which might not be feasible.

There is thus room for improvements in this technical area.

### BRIEF DESCRIPTION OF INVENTION

The aim of the present application is to develop arrangements and systems for cooling propulsion batteries. This aim is solved by an arrangement and a vehicle propulsion battery cooling system according to the independent patent claims. Preferable embodiments form the subject of the dependent patent claims.

According to one aspect, a coolant distribution arrangement for a vehicle propulsion battery cooling system is provided. The cooling system comprises a coolant inlet circuit, a coolant outlet circuit, and at least one coolant branch, configured to cool a set of propulsion battery packs.

The arrangement comprises a first manifold section, which first manifold section comprises a coolant inlet configured to receive coolant from the coolant inlet circuit, at least one supply outlet configured to supply coolant to the at least one coolant branch.

The arrangement further comprises a second manifold section, which second manifold section comprises at least one receiving inlet configured to receive coolant from the at least one coolant branch, a coolant outlet configured to return coolant to the coolant outlet circuit.

Further, the arrangement comprises a deairing connection between the first manifold section and the second manifold section configured to evacuate air from the first manifold section to the second manifold section. The first and the second manifold sections are discrete components and the deairing connection comprises a separate conduit.

With this solution, any air that has entered the inlet circuit and is transported to the first manifold section, due to for instance repairs wherein the cooling system is opened, will be transported from the first manifold section via the deairing connection to the second manifold section, where the air will be transported with the return flow back to the main cooling system that is provided with appropriate deairing devices. Also, air that might have entered the battery packs will be transported to the second manifold section and then follow the return flow back to the main cooling system.

With this solution, no additional deairing solution is necessary, whereby additional deairing devices, such as expansion tanks will not be necessary adjacent the arrangement and the coolant branch or branches with the battery packs. Nor will any additional deairing conduits be necessary. This is an advantage in particular when battery packs are placed in locations on the vehicle where it might be difficult or costly to provide additional deairing solutions, such as for instance when battery packs are placed remotely from the main cooling system and/or the space available is limited. The solution is thus cost-effective both regarding omission of additional components as well as reduced complexity and reduced assembly time.

According to a further aspect, the deairing connection may be arranged downstream of the supply outlets of the first manifold section, and in this regard, the deairing connection, when the arrangement is attached to a vehicle, may be positioned higher than the supply outlets. Thus, any air in the first manifold section will be transported with the flow of coolant to the deairing connection, reducing the risk of air entering the outlets to the battery packs and reaching the battery packs.

Further in this regard, the coolant inlet may be arranged upstream of the supply outlets. This provides the advantage that there is a pressure drop in the first manifold section, in turn providing an equalized flow of coolant through all the outlets and thus an equalized flow through the battery packs, which in turn provides the same cooling in all the battery packs.

According to a further aspect, the deairing connection may be arranged downstream of the receiving inlets of the second manifold section. In this regard, the deairing connection may be arranged upstream of the coolant outlet, whereby air in the second manifold section is evacuated through the coolant outlet. Thus, both air from the deairing connection and any air from the battery packs will be transported by the flow of coolant through the coolant outlet and back to the main cooling system. Further in this regard, the coolant outlet, when the arrangement is attached to a vehicle, is positioned higher than the deairing connection. This ensures that any air in the second manifold section will rise to the upper part where the coolant outlet is positioned.

The first and the second manifold sections are discrete components and the deairing connection comprises a separate conduit. This may be an advantage if the space available is such that it is difficult to provide it as a single unit. As another option, the first and the second manifold sections may form a single unit and wherein the deairing connection comprises a passage provided in the unit. If available space allows it, then a single unit might be a good option, reducing the number of components and thus assembly time and cost.

According to a further aspect, a vehicle propulsion battery cooling system is provided, comprising a coolant distribution arrangement as described above.

With such a vehicle propulsion battery cooling system, several distribution pipe circuits may be fluidly connected in series or in parallel to the main cooling system. It is thus possible to have several places on the vehicle where battery packs are positioned, such as on several locations on a roof of a buss, such as an articulated buss, and still utilize the benefits of the solution. Thus, the at least one distribution pipe circuit and the battery packs may be located remotely from the main cooling system, and actually quite far from the main cooling system. That can for example be the case where battery packs have to be arranged several meters higher up and farther away from the main cooling system. One example here is busses for public transport where the main cooling system often is placed in the rear part of the buss while several battery packs have to be placed on the roof due to the limited space inside the bus. This is even more pronounced with articulated busses where some battery packs are arranged on the roof of the front part while some battery packs are arranged on the roof of the rear part.

The solution may thus comprise a single coolant inlet circuit and a single coolant outlet circuit for fluid connection between the main cooling system and the distribution pipe circuit. Thus, as a minimum, only two conduits are required for providing adequate cooling of battery packs even when placed remotely from the main cooling system and even if more than one cluster of battery packs are to be cooled.

These and other aspects of, and advantages with, the present invention will become apparent from the following detailed description of the invention and from the accompanying drawings.

### BRIEF DESCRIPTION OF DRAWINGS

In the following detailed description of the invention, reference will be made to the accompanying drawings, of which
Fig. 1 schematically shows a distribution pipe circuit, comprising a coolant distribution arrangement, to be fluidly connected to a main cooling system of a vehicle as well as being fluidly connected to propulsion battery packs,
Fig. 2 schematically shows two distribution pipe circuits according to Fig. 1 fluidly connected in series,
Fig. 3 schematically shows two distribution pipe circuits according to Fig. 1 fluidly connected in parallel,

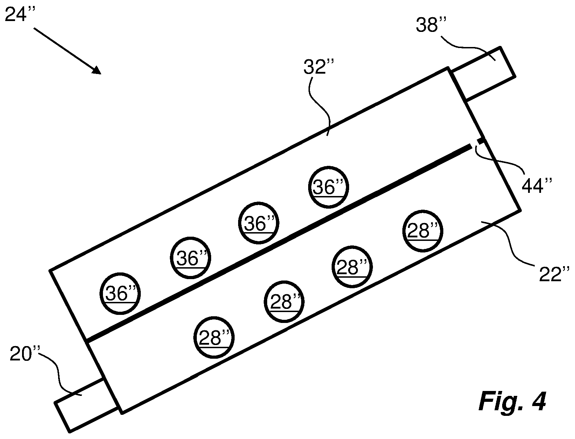

Fig. 4 schematically shows an example of a coolant distribution arrangement that may be comprised in the distribution pipe circuit of Fig. 1, and
Figs. 5-8 schematically show different vehicles provided with propulsion battery pack cooling systems comprising the distribution pipe circuit with the coolant distribution arrangement.

### DETAILED DESCRIPTION OF THE INVENTION

In this application, "cooling system", "coolant" and "cooling" is used in connection with handling temperatures of propulsion batteries. It is to be understood that even though propulsion batteries produce heat during operation, during certain weather conditions and outside temperatures, the cooling system and the coolant may be used for warming propulsion batteries. The application shall thus not be regarded as limited to only cooling, but may also entail warming. Thus, the temperature of the coolant provided to the propulsion batteries may be cooler than the temperature of the propulsion batteries, but the temperatures of the coolant may also warmer than the temperatures of the propulsion batteries.

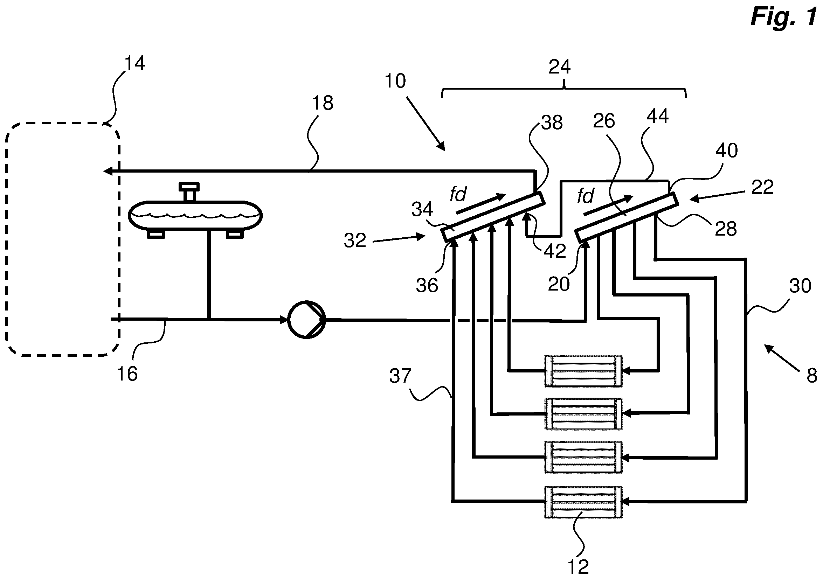

One example of a distribution pipe circuit 10 of a vehicle propulsion battery cooling system 8 for cooling propulsion batteries 12 is shown in Fig. 1. The distribution pipe circuit 10 is fluidly connected to a main cooling system 14 that is configured to regulate the temperature of a number of propulsion batteries arranged in a vehicle. The main cooling system comprises a number of units for the temperature regulation such as a temperature conditioning circuit. The temperature conditioning circuit may comprise radiators, pumps, valves, coolers and heaters as well as regulating and control means as well as sensors of different types. This type of temperature conditioning circuit is well known in this technical field and will not be described in more detail. Each propulsion battery comprises a plurality of battery cells encased in enclosure forming a battery pack, which is the wording that is used in this application. It is to be understood that propulsion batteries may have different layout and chemical compositions, which is outside the scope of the present application. The important aspect is that the cells of the battery packs can be temperature controlled.

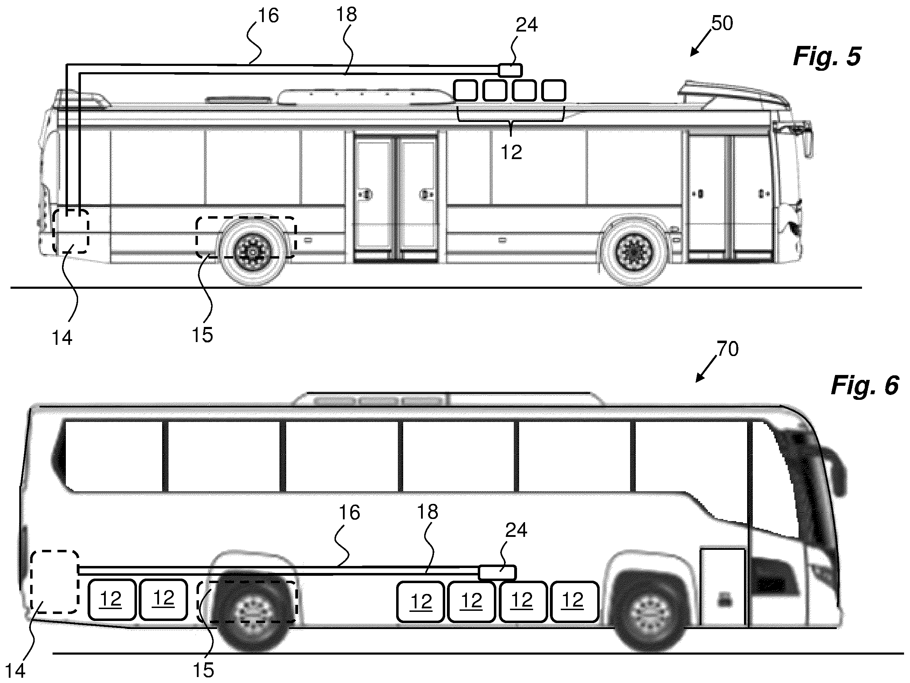

From the main cooling system only two conduits 16, 18 are drawn to the location that a cluster of propulsion battery packs 12 is located, one coolant inlet circuit 16 for incoming coolant and one coolant outlet circuit 18 for return coolant. The location may be on the roof of a vehicle such as a public transport bus 50, see Fig. 5, i.e. remotely from the main cooling system 14. The battery packs 12 comprise a large number of battery cells encased in a suitable housing, whereby space for coolant is created between the cells and the housing. The coolant is used for keeping the battery cells in an even temperature during operation. The battery packs 12 are connected in appropriate ways to an electrical machine 15 for propelling the vehicle. The connection to the electrical machine and its controlling does not form part of the present application and will not be discussed in detail in the following.

According to the application, the inlet conduit 16 is connected to an inlet port 20 of a first manifold section 22 of a coolant distribution arrangement 24 comprised in the distribution pipe circuit 10, Fig. 1. The first manifold section 22 preferably has an elongated hollow body 26, providing an elongated volume. The inlet port 20 is preferably positioned at one end of the body 26, whereby coolant entering the volume will have a flow direction *fd* along the elongated body 26. The first coolant manifold section 22 is further arranged with a number of outlet ports 28, the number corresponding to the number of battery packs 12 that are to be cooled, preferably positioned along the elongated body 26. Suitable conduits 30 are connected between the outlet ports 28 and the battery packs 12.

The coolant distribution arrangement 24 is further provided with a second manifold section 32. The second manifold section 32 preferably also has an elongated hollow body 34, providing an elongated volume. The second manifold section 32 is further provided with a number of inlet ports 36, the number corresponding to the number of battery packs 12. Suitable fluid conduits 37 are connected between the battery packs 12 and the inlet ports 36. The second manifold section 32 is further provided with an outlet port 38, preferably positioned at one end of the body 34, to which outlet port 38 the coolant outlet circuit 18 is connected for return of the coolant to the main cooling system 14. A flow direction *fd* in the elongated body 34 will be created from the inlet ports 36 to the outlet port 38.

As seen with this solution, the battery packs 12 are connected in parallel with the first and the second manifold section 22, 32. The first manifold section 22 preferably has a volume that creates an even pressure level from the inlet of coolant. This also creates an even flow to all battery packs which is important for providing the same temperature control in all battery packs of the circuit.

Further, as seen in Fig. 1, the first manifold section 22 is angled or inclined in its extension in relation to a horizontal plane. The inlet port 20 is preferably positioned in one end of the first manifold section, and more preferably in the lower end of the inclined first manifold section. This provides the advantage that any air that might be present in the incoming coolant will rise and will move along an upper area of the volume of the first manifold section 22 up to the upper end of the inclined first manifold section 22. Further, the outlet ports 28 to the battery packs 12 are preferably placed in a lower section of the volume of the first manifold section 22 in order to avoid or minimize the risk of air entering the battery packs 12 that might be present in the incoming coolant, since most of any air entering the volume of the first manifold section 22 will rise to an upper part of the volume.

According to the application, in order to evacuate air that is present in the first manifold section 22, a deairing outlet port 40 is arranged at the upper end of the inclined first manifold section 22. Thus, the deairing outlet port 40 is placed downstream of the outlet ports 28. The deairing outlet port 40 is fluidly connected to a deairing inlet port 42 on the second manifold section via a connection 44, forming a deairing bypass. The bypass connection 44 could for example be a suitable conduit such as a hose.

Further, as seen in Fig. 1, the second manifold section 32 is also arranged angled or inclined with respect to a horizontal plane. Here, the outlet port 38 for the return of coolant is arranged at the upper end of the inclined second manifold 32. The deairing inlet port 42 for the bypass connection 44 is positioned upstream of the outlet port 38 for the coolant as seen in the flow direction *fd*. Further, the deairing inlet port 42 for the bypass connection 44 is positioned downstream of the inlet ports 36 of the battery packs 12. Thus, air that is transported from the first manifold section 22 to the second manifold section 32 via the bypass connection 44 will be introduced into the flow of coolant returning from the second manifold section 32 to the main cooling system and evacuated through the expansion tank of the main cooling system. Further, any air present in the coolant from the battery packs 12 will be transported by the flow of coolant returning from the second manifold section 32.

Even though the first and the second manifold sections 22, 32 have been shown to be inclined, they could also be arranged vertical with the outlet port 40 of the bypass connection 44 at the top of the first manifold section 22 and the outlet port 38 for coolant return at the top of the second manifold section 32.

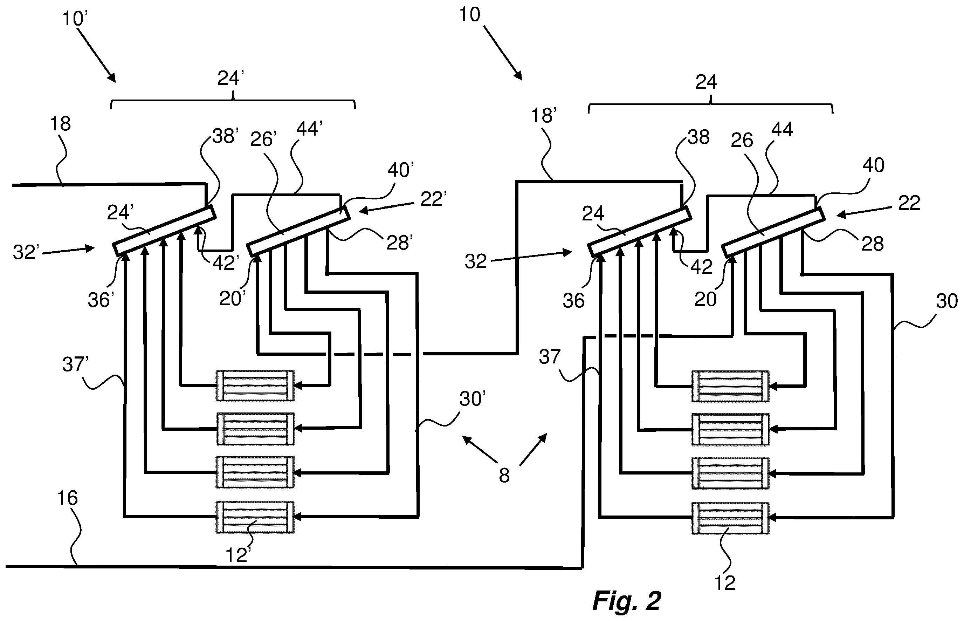

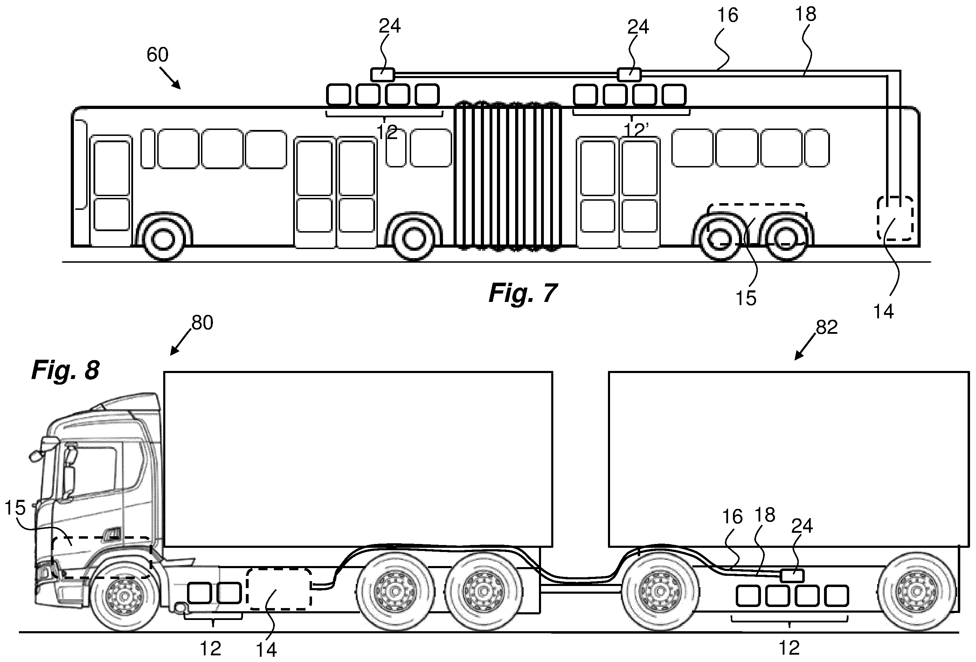

If more clusters of battery packs 12 are positioned remotely from the main cooling system, an inter-connection may be provided. This may for example be the case with articulated busses 60 used for public transport, Fig. 7, where one cluster 12 may be arranged remotely on the roof of the front part while one cluster 12' may be arranged remotely on the roof of the rear part. A first variant of such a solution is schematically shown in Fig. 2 where two distribution circuits are connected in series. Here a return circuit 18' from a first distribution circuit 10 is connected to an inlet port 20' of a first manifold section 22' of a second distribution pipe circuit 10'. The second distribution pipe circuit 10' may be arranged in the same manner as the first distribution pipe circuit 10 with fluid conduits 30' from the first manifold section 22' to the battery packs 12' of the second cluster. From the battery packs 12', fluid conduits 37' are connected to the second manifold section 32'. At the upper end of the second manifold section 32', a return circuit 18 to the main cooling system 14 is provided. As with the previously described embodiment with a single distribution pipe circuit, also here a deairing bypass connection 44' is provided between the first and the second manifold sections 22', 32', whereby air that is transported with the coolant from the first distribution pipe circuit 10 will enter the first manifold section 22' of the second distribution pipe circuit 10', and will be led via the bypass connection 44' to the second manifold section 32' of the second distribution pipe circuit 10' and then transported back to the main cooling system with the return coolant as described above.

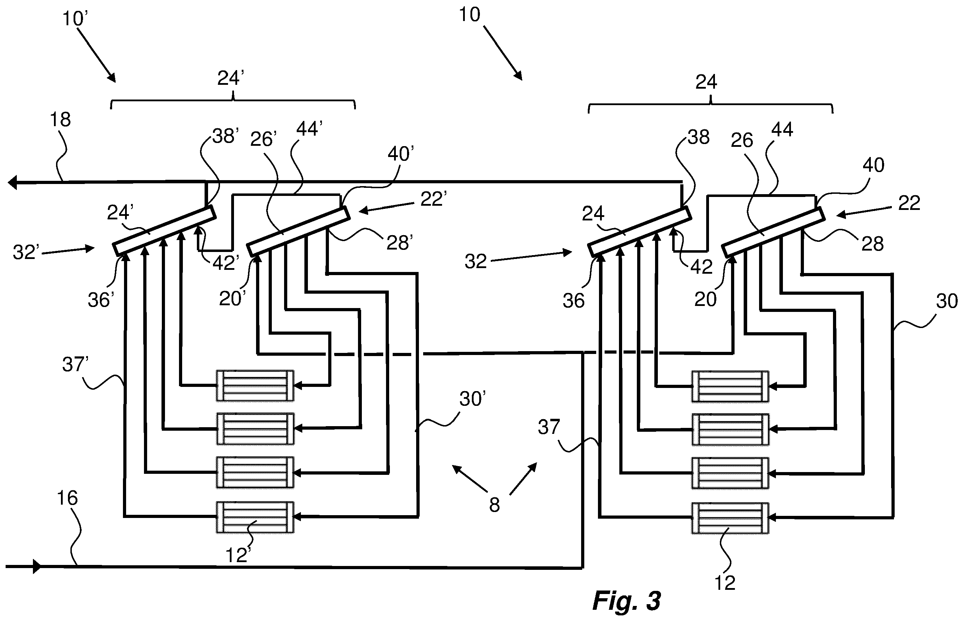

Another variant is shown in Fig. 3, which is very similar regarding the layout as the variant of Fig. 2. However, here two distribution circuits 10 and 10' are connected in parallel. Thus, as seen in Fig. 3, the incoming circuit 16 is branched to provide coolant to both first manifold sections 22 and 22'. In the same manner, the coolant return from both second manifold sections 32 and 32' are connected to the return circuit 18. This setup might require an additional pump or a larger pump than for a single circuit or for circuits connected in series.

With this solution, it is thus possible to connect and to cool several battery pack clusters with the same main inlet and outlet conduits from the main cooling system. Thus, even if there are several battery clusters arranged remotely from the cooling system, it is not necessary to provide several inlet and outlet conduits which is an advantage when taking into account the limited space available as well as the distances between the battery pack clusters and the main cooling system.

In the above shown embodiments, the coolant distribution arrangement 24 has been shown and described as two separate manifold sections with the bypass connection as a separate conduit, but it is of course possible to provide the coolant distribution arrangement as a single unit. Figure 3 shows a schematic example of such a unit 24". Here a lower first part 22" of the unit 24" corresponds to the first manifold section with the inlet port 20" from the main cooling system at a lower end. The outlet ports 28" for supplying coolant to the battery packs are arranged along a lower section of the volume of the first part 22". An upper second part 32" of the unit 24" corresponds to the second manifold section, having the inlet ports 36" for coolant returning from the battery packs arranged along a lower section of the volume of the second part 32". At the upper end of the second part 32", an outlet port 38" for the return of coolant to the main cooling system is provided. As seen in the figure, a passage 44" is provided between the two parts 22", 32" in an upper area thereof, creating a bypass connection.

Thus, any air entering the volume of the first part 22" will move along the upper area of the volume of the first part" and will thus not be drawn into the flow of coolant to the battery packs, at least not to any larger extent. Instead, the air will flow through the bypass connection 44" into the volume of the second part 32" adjacent the outlet port 38" for the return of coolant. Thus, the air will be drawn together with the coolant out of the unit and be transported back to the cooling system where it will be deaired via an expansion tank of the cooling system. This solution provides a very compact yet effective solution both for the distribution of coolant to a number of battery packs as well as handling any air included in the coolant without air entering the battery packs.

In the foregoing, it has been mentioned that clusters of battery packs may be arranged on the roof of a vehicle. However, it is possible to utilize the present application where clusters of battery packs are placed in other positions in a vehicle, which positions may be at some distance or remotely from the main cooling system. For instance, in a long-distance bus or coach 70, some battery packs 12 may be placed under the floor of the passenger compartment towards the front of the coach, where the main cooling system 14 is situated in the rear of the coach as seen in Fig. 6. Also with this situation, it is an advantage that as few conduits as possible are drawn through the vehicle, since it will interfere with luggage space under the passenger compartment and also lead to increased assembly time of the system as well as increased complexity. As mentioned above, with the solution according to the present application, only two conduits are needed for the supply of coolant to battery packs positioned remotely from the main cooling system.

Another example where the present solution may be used is for trucks 80 and the like heavy vehicles that are configured to be connected to and tow a trailer 82. The trailer is often a separate unit that may be connected and disconnected to the truck. As seen schematically in Fig. 8, one or several battery pack clusters 12 may be provided remotely on the trailer in addition to battery packs mounted on the truck. The present application may then be used for cooling of the battery packs on the trailer, and it is therefore an advantage that only two conduits are arranged between the truck and the trailer.

It is to be understood that the embodiments described above and shown in the drawings are to be regarded only as non-limiting examples and that the present application can be embodied in many ways within the scope of the patent claims.

## Claims

1. A coolant distribution arrangement (24, 24', 24") for a vehicle propulsion battery cooling system (8), the cooling system (8) comprising a coolant inlet circuit (16), a coolant outlet circuit (18), and at least one coolant branch (30, 37), configured to cool a set of propulsion battery packs (12, 12'), wherein
- the arrangement (24, 24', 24") comprises a first manifold section (22, 22', 22"), which first manifold section (22, 22', 22") comprises:
- a coolant inlet (20, 20', 20") configured to receive coolant from the coolant inlet circuit (16),
- at least one supply outlet (28, 28', 28") configured to supply coolant to the at least one coolant branch (30, 37; 30', 37'),
wherein the arrangement comprises a second manifold section (32, 32', 32"), which second manifold section (32, 32', 32") comprises:
- at least one receiving inlet (36, 36', 36") configured to receive coolant from the at least one coolant branch (30, 37; 30', 37'),
- a coolant outlet (38, 38', 38") configured to return coolant to the coolant outlet circuit (18), and
wherein the arrangement (24, 24', 24") comprises a deairing connection (44, 44', 44") between the first manifold section (22, 22', 22") and the second manifold section (32, 32', 32") configured to evacuate air from the first manifold section (22, 22', 22") to the second manifold section (32, 32', 32"), **characterized in that** the first and the second manifold sections (22, 22', 32, 32') are discrete components and wherein the deairing connection (44, 44') comprises a separate conduit.

2. A coolant distribution arrangement (24, 24', 24") according to claim 1, wherein the deairing connection (44, 44', 44") is arranged downstream of the at least one supply outlet (28, 28', 28") of the first manifold section (22, 22', 22").

3. A coolant distribution arrangement (24, 24', 24") according to claim 2, wherein the deairing connection (44, 44', 44"), when the arrangement (24, 24', 24") is attached to a vehicle, is positioned higher than the at least one supply outlet (28, 28', 28").

4. A coolant distribution arrangement (24, 24', 24") according to claim 2 or 3, wherein the coolant inlet (20, 20', 20") is arranged upstream of said at least one supply outlet (28, 28', 28").

5. A coolant distribution arrangement (24, 24', 24") according to any of the claims 2 to 4, wherein the deairing connection (44, 44', 44") is arranged downstream of the at least one receiving inlet (36, 36', 36") of the second manifold section (32, 32', 32").

6. A coolant distribution arrangement (24, 24', 24") according to claim 5, wherein the deairing connection (44, 44', 44") is arranged upstream of the coolant outlet (28, 28', 28"), whereby air in the second manifold section (32, 32', 32") is evacuated through the coolant outlet (28, 28', 28").

7. A coolant distribution arrangement (24, 24', 24") according to any of the claims 4 to 6, wherein the coolant outlet (28, 28', 28"), when the arrangement (24, 24', 24") is attached to a vehicle, is positioned higher than the deairing connection (44, 44', 44").

8. A vehicle propulsion battery cooling system (8) comprising:
- a coolant distribution arrangement (24, 24', 24") according to any of the preceding claims.

9. A vehicle comprising a main cooling system (14), a set of propulsion battery packs (12, 12') and a vehicle propulsion battery cooling system (8) according to claim 8,
wherein the vehicle propulsion battery cooling system (8) is configured to cool the set of propulsion battery packs (12, 12'), wherein the main cooling system (14) is fluidly connected to a distribution pipe circuit (10) of the vehicle propulsion battery cooling system (8).

## Patentansprüche

1. Kühlmittelverteilungsanordnung (24, 24', 24") für ein Fahrzeugantriebsbatterie-Kühlsystem (8), wobei das Kühlsystem (8) einen Kühlmitteleinlasskreislauf (16), einen Kühlmittelauslasskreislauf (18) und wenigstens eine Kühlmittelverzweigung (30, 37) umfasst, die zum Kühlen eines Satzes Antriebsbatteriepacks (12, 12') eingerichtet ist, wobei
- die Anordnung (24, 24', 24") einen ersten Verteilerabschnitt (22, 22', 22") umfasst, wobei der erste Verteilerabschnitt (22, 22', 22") umfasst:
- einen Kühlmitteleinlass (20, 20', 20"), der zum Aufnehmen von Kühlmittel aus dem Kühlmitteleinlasskreislauf (16) eingerichtet ist,
- wenigstens einen Versorgungsauslass (28, 28', 28"), der zum Liefern von Kühlmittel zu der wenigstens einen Kühlmittelverzweigung (30, 37; 30', 37') eingerichtet ist,
wobei die Anordnung einen zweiten Verteilerabschnitt (32, 32', 32") umfasst, wobei der zweite Verteilerabschnitt (32, 32', 32") umfasst:
- wenigstens einen Aufnahmeeinlass (36, 36', 36"), der zum Aufnehmen von Kühlmittel aus der wenigstens einen Kühlmittelverzweigung (30, 37; 30', 37') eingerichtet ist,
- einen Kühlmittelauslass (38, 38', 38"), der zur Rückführung von Kühlmittel in den Kühlmittelauslasskreislauf (18) eingerichtet ist, und
wobei die Anordnung (24, 24', 24") einen Entlüftungsanschluss (44, 44', 44") zwischen dem ersten Verteilerabschnitt (22, 22', 22") und dem zweiten Verteilerabschnitt (32, 32', 32") umfasst, der dazu eingerichtet ist, Luft aus dem ersten Verteilerabschnitt (22, 22', 22") in den zweiten Verteilerabschnitt (32, 32', 32") abzuleiten, **dadurch gekennzeichnet, dass** der erste und der zweite Verteilerabschnitt (22, 22', 32, 32') diskrete Komponenten sind, und wobei der Entlüftungsanschluss (44, 44') eine separate Leitung umfasst.

2. Kühlmittelverteilungsanordnung (24, 24', 24") nach Anspruch 1, wobei der Entlüftungsanschluss (44, 44', 44") stromabwärts des wenigstens einen Versorgungsauslasses (28, 28', 28") des ersten Verteilerabschnitts (22, 22', 22") angeordnet ist.

3. Kühlmittelverteilungsanordnung (24, 24', 24") nach Anspruch 2, wobei der Entlüftungsanschluss (44, 44', 44") höher positioniert ist als der wenigstens eine Versorgungsauslass (28, 28', 28"), wenn die Anordnung (24, 24', 24") an einem Fahrzeug angebracht ist.

4. Kühlmittelverteilungsanordnung (24, 24', 24") nach Anspruch 2 oder 3, wobei der Kühlmitteleinlass (20, 20', 20") stromaufwärts des wenigstens einen Versorgungsauslasses (28, 28', 28") angeordnet ist.

5. Kühlmittelverteilungsanordnung (24, 24', 24") nach einem der Ansprüche 2 bis 4, wobei der Entlüftungsanschluss (44, 44', 44") stromabwärts des wenigstens einen Aufnahmeeinlasses (36, 36', 36") des zweiten Verteilerabschnitts (32, 32', 32") angeordnet ist.

6. Kühlmittelverteilungsanordnung (24, 24', 24") nach Anspruch 5, wobei der Entlüftungsanschluss (44, 44', 44") stromaufwärts des Kühlmittelauslasses (28, 28', 28") angeordnet ist, wodurch Luft in dem zweiten Verteilerabschnitt (32, 32', 32") durch den Kühlmittelauslass (28, 28', 28") abgeleitet wird.

7. Kühlmittelverteilungsanordnung (24, 24', 24") nach einem der Ansprüche 4 bis 6, wobei der Kühlmittelauslass (28, 28', 28") höher positioniert ist als der Entlüftungsanschluss (44, 44', 44"), wenn die Anordnung (24, 24', 24") an einem Fahrzeug angebracht ist.

8. Fahrzeugantriebsbatterie-Kühlsystem (8) umfassend:
- eine Kühlmittelverteilungsanordnung (24, 24', 24") nach einem der vorangehenden Ansprüche.

9. Fahrzeug mit einem Hauptkühlsystem (14), einem Satz Antriebsbatteriepacks (12, 12') und einem Fahrzeugantriebsbatterie-Kühlsystem (8) nach Anspruch 8, wobei das Fahrzeugantriebsbatterie-Kühlsystem (8) zum Kühlen des Satzes Antriebsbatteriepacks (12, 12') eingerichtet ist, wobei das Hauptkühlsystem (14) mit einem Verteilerrohrkreislauf (10) des Fahrzeugantriebsbatterie-Kühlsystems (8) in Fluidverbindung steht.

## Revendications

1. L'invention concerne un agencement de distribution de réfrigérant (24, 24', 24") pour un système de refroidissement (8) de batterie de propulsion de véhicule, le système de refroidissement (8) comprenant un circuit d'entrée de réfrigérant (16), un circuit de sortie de réfrigérant (18), et l'au moins une branche de réfrigérant (30, 37), configuré pour refroidir un ensemble de blocs de batterie de propulsion (12, 12'), dans lequel
- l'agencement (24, 24', 24") comprend une première section de collecteur (22, 22', 22"), laquelle première section de collecteur (22, 22', 22") comprend :
- une entrée de réfrigérant (20, 20', 20") configurée pour recevoir du réfrigérant depuis le circuit d'entrée de réfrigérant (16),
- l'au moins une sortie d'alimentation (28, 28', 28") configurée pour fournir un fluide de refroidissement à l'au moins une branche de fluide de refroidissement (30, 37, 30', 37'), dans lequel l'agencement comprend une deuxième section de collecteur (32, 32', 32"), laquelle deuxième section de collecteur (32, 32', 32'') comprend :
- l'au moins une entrée de réception (36, 36', 36") configurée pour recevoir du réfrigérant de l'au moins une branche de réfrigérant (30, 37, 30', 37'),
- une sortie de réfrigérant (38, 38', 38") configurée pour renvoyer le réfrigérant au circuit de sortie de réfrigérant (18), et
dans lequel l'agencement (24, 24', 24") comprend une connexion de désaération (44, 44', 44") entre la première section de collecteur (22, 22', 22") et la deuxième section de collecteur (32, 32', 32") configurée pour évacuer l'air de la première section de collecteur (22, 22', 22") vers la deuxième section de collecteur (32, 32', 32"), **caractérisé en ce que** les première et deuxième sections de collecteur (22, 22', 32', 32') sont des composants discrets et dans lequel la connexion de désaération (44, 44') comprend un conduit séparé.

2. Dispositif de distribution de réfrigérant (24, 24', 24") selon la revendication 1, dans lequel la connexion de désaération (44, 44', 44") est disposée en aval de l'au moins une sortie d'alimentation (28, 28', 28") de la première section de collecteur (22, 22', 22").

3. Agencement de distribution de réfrigérant (24, 24', 24") selon la revendication 2, dans lequel la connexion de désaération (44, 44', 44"), lorsque l'agencement (24, 24', 24") est fixé à un véhicule, est positionnée plus haut que l'au moins une sortie d'alimentation (28, 28', 28").

4. Agencement de distribution de réfrigérant (24, 24', 24") selon la revendication 2 ou 3, dans lequel l'entrée de réfrigérant (20, 20', 20") est disposée en amont de ladite au moins une sortie d'alimentation (28, 28', 28").

5. Dispositif de distribution de réfrigérant (24, 24', 24") selon l'une quelconque des revendications 2 à 4, dans lequel la connexion de désaération (44, 44', 44") est disposée en aval de l'au moins une entrée de réception (36, 36', 36") de la deuxième section de collecteur (32, 32', 32").

6. Dispositif de distribution de réfrigérant (24, 24', 24") selon la revendication 5, dans lequel la connexion de désaération (44, 44', 44") est disposée en amont de la sortie de réfrigérant (28, 28', 28"), l'air dans la deuxième section de collecteur (32, 32', 32") étant évacué par la sortie de réfrigérant (28, 28', 28").

7. Agencement de distribution de réfrigérant (24, 24', 24") selon l'une quelconque des revendications 4 à 6, dans lequel la sortie de réfrigérant (28, 28', 28"), lorsque l'agencement (24, 24', 24") est fixé à un véhicule, est positionnée plus haut que la connexion de désaération (44, 44', 44").

8. Système de refroidissement (8) de batterie de propulsion de véhicule, comprenant :
- un agencement de distribution de réfrigérant (24, 24', 24") selon l'une quelconque des revendications précédentes.

9. Véhicule comprenant un système de refroidissement principal (14), un ensemble de blocs-batteries de propulsion (12, 12') et un système de refroidissement (8) de batterie de propulsion de véhicule, selon la revendication 8, dans lequel le système de refroidissement de batterie de propulsion de véhicule (8) est configuré pour refroidir l'ensemble de blocs-batteries de propulsion (12, 12'), dans lequel le système de refroidissement principal (14) est connecté de manière fluide à un circuit de tuyau de distribution (10) du système de refroidissement de batterie de propulsion de véhicule (8).
